# EUROPÄISCHE PATENTSCHRIFT

(11) **EP 0 360 105 B1**
(45) Veröffentlichungstag und Bekanntmachung des Hinweises auf die Patenterteilung: **22.09.1993**
(21) Anmeldenummer: 89116706.6
(22) Anmeldetag: 09.09.1989
(51) Int. Cl.: G21F 7/005, G21C 19/32

(54) **Vorrichtung zur Überführung von Brennstäben aus einem ersten Behältnis in ein zweites Behältnis**
Device for transferring fuel rods from a first container to a second container
Dispositif pour transférer des crayons de combustible depuis un premier conteneur vers un deuxième conteneur

(30) Priorität: 19.09.1988 DE 3831773
(43) Veröffentlichungstag der Anmeldung: 28.03.1990
(73) Patentinhaber: Noell GmbH, 97080 Würzburg (DE)
(72) Erfinder: Hardt, Norbert, D-3000 Hannover 1 (DE); Sterner, Hakan, D-3000 Hannover 1 (DE); Wetzka, Gerhard, D-8707 Veitshöchheim (DE); Schulte, Burkhart, D-4950 Minden (DE)
(74) Vertreter: Kaiser, Henning

(56) Entgegenhaltungen:
- EP-A- 0 171 774
- FR-A- 2 520 150

## Beschreibung

Die Erfindung betrifft eine Vorrichtung zur Überführung von abgebrannten Brennstäben aus einem rinnenförmigen ersten Behältnis in ein an eine Lüftungstrennwand angedocktes, zur Endlagerung bestimmtes zweites Behältnis.

Beim Hantieren von Brennstäben, z.B. beim Einlegen der Brennstäbe in das erste Behältnis, läßt es sich nicht vermeiden, daß von den abgebrannten Brennstäben radioaktive Partikel abfallen. Beim in der Praxis üblichen Ausschieben der Brennstäbe aus dem ersten Behältnis durch die Lüftungstrennwand in das Endlagerbehältnis tritt der Nachteil auf, daß z.B. an der Öffnung der Lüftungstrennwand befindliche, fernhantiert austauschbare Komponenten, wie Dichtungen etc., mit den von den Brennstäben in das erste Behältnis gefallenen radioaktiven Partikeln kontaminiert werden.

Der Erfindung liegt die Aufgabe zugrunde, eine Vorrichtung der eingangs beschriebenen Art zu schaffen, durch die eine mit geringem Aufwand zu bewerkstelligende Überführung von Brennstäben möglich ist, ohne daß eine Kontaminationsverschleppung auftritt.

Die Aufgabe wird erfindungsgemäß durch einen leer aus dem Endlagerbehältnis in das rinnenförmige Behältnis und von dort gefüllt zurück in das Endlagerbehältnis bewegbaren, trogförmigen Einsatz gelöst.

Durch die erfindungsgemäße Vorrichtung können abgebrannte Brennstäbe mit geringem, einfachen baulichen Aufwand vom rinnenförmigen Behältnis durch die Lüftungstrennwand in das Endlagerbehältnis überführt werden, ohne daß es an irgendwelchen zwischen den Behältnissen befindlichen Bauteilen zur Kontamination mit radioaktiven Partikeln kommt.

Eine vorteilhafte Ausführungsform der Erfindung besteht darin, daß der trogförmige Einsatz in seinem Mantelbereich die Form des rinnenförmigen Behältnisses und des Endlagerbehältnisses aufweist und in seinen äußeren Abmessungen um ein solches Maß kleiner is als die inneren Abmessungen der beiden Behältnisse, daß der trogförmige Einsatz bei leichter Beweglichkeit in den beiden Behältnissen diese räumlich größtmöglich nutzt.
Hierdurch können Brennstäbe mühelos in einer Anzahl überführt werden, durch die ein Endlagerbehältnis in einem Arbeitsgang maximal gefüllt ist.

Anhand der Zeichnung wird ein Ausführungsbeispiel der Erfindung nachstehend näher erläutert.

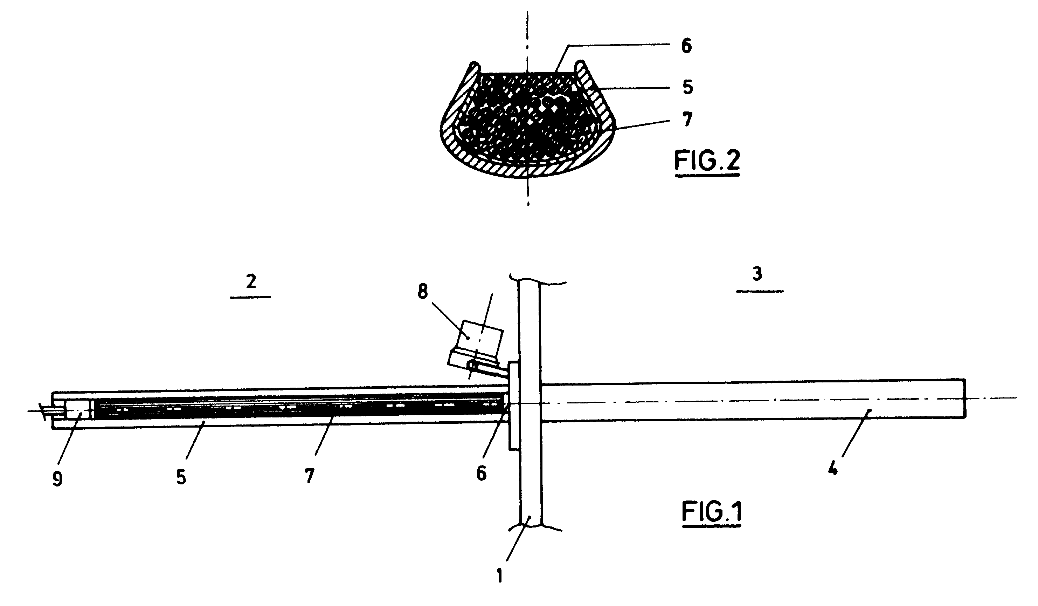

Es zeigt
- Fig. 1: eine zur Überführung von Brennstäben vorhandene Vorrichtung zusammen mit einem rinnenförmigen Behältnis, einer Lüftungstrennwand und einem Endlagerbehältnis in Draufsicht,
- Fig. 2: die Vorrichtung aus Fig. 1 zusammen mit dem rinnenförmigen Behältnis im vergrößerten Querschnitt.

Mit 1 ist eine senkrechte Lüftungstrennwand bezeichnet, die einen Arbeitsbereich in zwei separate, voneinander lüftungstechnisch getrennte Räume 2 und 3 unterteilt. Der Raum 3 dient dem Hantieren und Beladen eines Edelstahlbehältnisses 4. Der Raum 2 ist mit einer offenen radioaktiven Belastung beaufschlagt, da in ihm zugeführte abgebrannte Brennelemente zerlegt werden. Im Raum 2 befindet sich ein Edelstahlbehältnis 5. Das Behältnis 4 ist in seinem Mantelbereich geschlossen und stellt eine sogenannte Büchse dar, die nach dem Beladen mit Brennstäben in einen Endlagerbehälter eingebracht wird. Das Behältnis 5 ist rinnenförmig und dient als Aufnahmebehältnis für einen trogförmigen Einsatz 6 aus Edelstahlblech, der die endzulagernden Brennstäbe aufnimmt. Sowohl das Behältnis 4 als auch das Behältnis 5 weisen an ihrer der Lüftungstrennwand 1 zugewandten Stirnseite eine Öffnung auf, die mit einer durch eine Haube 8 verschließbaren Durchgangsöffnung in der Lüftungstrennwand 1 fluchtet. Das Behältnis 4 ist an der Lüftungstrennwand 1 über zeichnerisch nicht dargestellte Dichtungs- und Besfestigungsmittel angedockt. Das Behältnis 5 weist an seiner der Lüftungstrennwand 1 entgegengesetzten Seite ein Verschiebegestänge 9 auf.

Die Wirkungsweise des vorstehend geschilderten Ausführungsbeispiels ist wie folgt:
Das zu beladende Behältnis 4 wird mit dem Einsatz 6 angeliefert und an die Lüftungstrennwand 1 angedockt. Nachdem die fernbetätigbare Haube 8 die Durchgangsöffung in der Lüftungstrennwand 1 freigegeben hat und auch das Behältnis 4 fernhantiert geöffnet worden ist, wird das Behältnis 5 mit seiner stirnseitigen Öffnung an die Lüftungstrennwand 1 angedockt. Über das fernbetätigbare Verschiebegestänge 9 wird dann der Einsatz 6 aus dem Behältnis 4 heraus in das Behältnis 5 gezogen. Die abgebrannten Brennstäbe 7 werden in den Einsatz 6 gefüllt und dann der gefüllte Einsatz 6 über das fernbetätigbare Verschiebegestänge 9 wieder in das Behältnis 4 zurückbefördert. Nachdem das Behältnis 5 von der Lüftungstrennwand 1 abgedockt, die Durchgangsöffnung der Lüftungstrennwand 1 durch die Haube 8 wieder geschlossen wurde und auch das Behältnis 4 wieder verschlossen ist, wird das Behältnis 4 von der Lüftungstrennwand abgedockt, in einen Endlagerbehälter eingesetzt und kann dann der bergmännischen Endlagerung zugeführt werden.

## Patentansprüche

1. Vorrichtung zur Überführung von abgebrannten Brennstäben aus einem rinnenförmigen ersten Behältnis in ein an eine Lüftungstrennwand angedocktes, zur Endlagerung bestimmtes zweites Behältnis, gekennzeichnet durch einen leer aus dem Endlagerbehältnis (4) in das rinnenförmige Behältnis (5) und von dort gefüllt zurück in das Endlagerbehältnis (4) bewegbaren trogförmigen Einsatz (6).

2. Vorrichtung nach Anspruch 1, dadurch gekennzeichnet, daß der Einsatz (6) in seinem Mantelbereich die Form der Behältnisse (4; 5) aufweist und in seinen äußeren Abmessungen etwas kleiner ist als die inneren Abmessungen der Behältnisse (4; 5).

## Claims

1. Device for transferring burnt-out fuel rods from a duct-like first container into a second container, which is connected to a ventilation dividing wall and is intended for final storage, characterised by a trough-shaped insert (6), which is displaceable, empty, from the final storage container (4) into the duct-like container (5) and from there, full, back into the final storage container (4).

2. Device according to claim 1, characterized in that the surface region of the insert (6) has the configuration of the containers (4; 5), and the external dimensions of such insert are somewhat smaller than the internal dimensions of the containers (4; 5).

## Revendications

1. Dispositif pour transférer des crayons combustibles brûlés depuis un premier conteneur en forme de rigole vers un second conteneur attaché à une cloison d'aération et destiné à l'évacuation des déchets radioactifs, caractérisé par un élément en forme d'auge (6) apte à être déplacé, vide, du conteneur d'évacuation (4) vers le conteneur en forme de rigole (5) et, de là, à revenir, rempli, dans le conteneur d'évacuation (4).

2. Dispositif selon la revendication 1, caractérisé en ce que l'élément (6) présente, dans sa zone d'enveloppe, la forme des conteneurs (4 ; 5) et présente des dimensions extérieures légèrement inférieures aux dimensions intérieures des conteneurs (4 ; 5).
